**Europäisches Patentamt**

**European Patent Office**

**Office européen des brevets**

(11) Veröffentlichungsnummer: **0 422 265 A1**

# (12) EUROPÄISCHE PATENTANMELDUNG

(21) Anmeldenummer: **89118831.0**

(22) Anmeldetag: **10.10.89**

(51) Int. Cl.5: **C05F 3/00, C05F 7/00**

(43) Veröffentlichungstag der Anmeldung:
**17.04.91 Patentblatt 91/16**

(84) Benannte Vertragsstaäten:
**BE CH DE FR GB LI NL**

(71) Anmelder: **Hench, Hans**
**Sonnhalde 31**
**W-7851 Inzlingen(DE)**

(72) Erfinder: **Anliker, Dora**
**Schulhausstrasse 3**
**CH-8340 Hadlikon-Hinwil(CH)**
Erfinder: **Anliker, Werner**
**Schulhausstrasse 3**
**CH-8340 Hadlikon-Hinwil(CH)**

(74) Vertreter: **Haft, Berngruber, Czybulka**
**Postfach 14 02 46 Hans-Sachs-Strasse 5**
**W-8000 München 5(DE)**

(54) **Verfahren und Mittel zur Aufbereitung von fäkalen Abfällen und Klärschlamm.**

(57) Fäkale Abfälle, insbesondere Gülle, oder Klärschlamm werden durch Zusatz eines Pilzpräparats zu einem wertvollen Düngemittelgranulat aufgearbeitet.

EP 0 422 265 A1

## VERFAHREN UND MITTEL ZUR AUFBEREITUNG VON FÄKALEN ABFÄLLEN UND KLÄRSCHLAMM

Die Erfindung bezieht sich auf ein Verfahren zur Aufbereitung von fäkalen Abfällen und Klärschlamm durch Zugabe von Mikroorganismen. Sie hat auch ein Mittel zur Durchführung eines solchen Verfahrens zum Gegenstand.

Die moderne Massentierhaltung hat zu erheblichen Mengen fäkaler Abfälle geführt, welche insbesondere in Form von Gülle, also einem Kot/Harngemisch mit und ohne Einstreu der landwirtschaftlichen Tiere anfallen. Diese fäkalen Abfälle belasten die Umwelt einmal durch ihren starken, üblen und lang anhaltenden Geruch. Ferner entwikkelt sich bei der Fäulnis der Fäkalien, wie sie bei der Lagerung normalerweise eintritt, eine große Anzahl stark wurzeltoxischer Substanzen, wodurch das Nährstoffaufnahmevermögen der gedüngten Pflanzen so stark herabgesetzt wird, daß fäkale Abfälle trotz ihres an sich hohen Nährstoffgehalts als unberechenbare und unzuverlässige Düngemittel gelten. Darüberhinaus führt das Ausbringen von Gülle zur Bildung von Unkraut. Ferner werden Pflanzen oder Grünfutter, auf die fäkale Abfälle aufgebracht worden sind, von den Tieren im allgemeinen verweigert. Ähnliche Probleme treten bei Klärschlamm auf.

Um diese Probleme wenigstens teilweise zu entschärfen, ist die Ausbringung fäkaler Abfälle auf die Zeit nach Ende der Vegetationsperiode, also in den Herbst oder Winter verlegt worden. Diese Art der Ausbringung hat jedoch den Nachteil, daß die durch die Nitrifikation des Ammoniak-Stickstoffs gebildeten Nitrate nicht von den Pflanzen aufgenommen werden können und damit in besonders großer Menge in das Grundwasser gelangen. Die Ausbringung von fäkalen Abfällen und Klärschlamm stellt deshalb die Hauptursache für die bedrohlich zunehmende Grundwasserverschmutzung mit Nitrat dar.

Fäkale Abfälle enthalten weiterhin große Mengen an Schleimstoffen, die die feinen Poren des Bodens verstopfen, wodurch dessen Absorptionsvermögen herabgesetzt wird, so daß die fäkalen Abfälle, einschließlich der darin enthaltenen Krankheitserreger, unmittelbar in das Oberflächenwasser, also in Seen und Flüsse gelangen.

Durch die intensive Massentierhaltung haben sich diese Probleme nunmehr so verschärft, daß in einigen Ländern der Gesetzgeber Verordnungen erlassen mußte, nach denen beispielsweise in den Wintermonaten keine Gülle mehr ausgebracht werden darf oder die auf eine bestimmte Fläche landwirtschaftlichen Bodens ausbringbare Güllemenge beschränkt worden ist. Bei Betrieben mit intensiver Viehhaltung ist daher der Gülleüberhang zu einem kaum noch zu bewältigenden Problem geworden.

Aus der DE-OS 32 25 454 ist es bekannt, der Gülle ein Bentonit-Präparat zuzusetzen, das mit Mikroorganismen angereichert ist. Als Mikroorganismen werden dabei Bakterien, nämlich Sporenbildner (Bacillaceae), coryneforme Bakterien, Mikrokokken und Streptokokken verwendet. Das Bentonit-Präparat läßt man mehrere Monate auf die Gülle einwirken, wodurch der üble Geruch der Gülle abgeschwächt und die Gülle dünnflüssiger wird. Vor dem Ausbringen der Gülle mit dem Güllewagen wird noch Super-Phosphat zugegeben, um das wurzeltoxische Ammoniumcarbonat in Ammoniumphosphat überzuführen.

Durch die mehrmonatige Behandlungszeit erfordert das bekannte Verfahren große Güllebehälter. Auch ist der Zusatz an dem mit Mikroorganismen angereichertem Bentonit und Super-Phosphat mit relativ hohen Kosten verbunden.

Auf der anderen Seite gibt es viele Betriebe, die oft ohne ein Stück Vieh reinen Ackerbau betreiben und damit selbst keine Gülle oder einen anderen natürlichen Dünger erzeugen. Es bietet sich daher an, die Gülle zu einem auf Ackerbau spezialisierten Betrieb zu transportieren. Der Transport flüssiger Gülle, wie sie bei dem Verfahren nach der DE-OS 32 25 454 anfällt, über eine größere Entfernung ist jedoch unwirtschaftlich. Die Folge davon ist, daß durch Ausbringen der Gülle in der Umgebung des die Gülle erzeugenden Betriebs dem Boden ein Überangebot an Nährstoffen zugeführt wird, während keine oder nur wenig Gülle erzeugende Betriebe teuren Kunstdünger hinzukaufen müssen.

Aufgabe der Erfindung ist es daher, ein Verfahren zur Aufbereitung fäkaler Abfälle und von Klärschlamm bereitzustellen, mit dem relativ schnell und ohne teure Zusätze ein Düngemittel-Granulat mit hohem Nährstoffgehalt und hoher Umweltverträglichkeit erhalten wird, das problemlos transportiert und gelagert werden kann.

Als fäkale Abfälle können nach dem erfindungsgemäßen Verfahren beispielsweise Jauche, Gülle oder Mist behandelt werden.

Bei Jauche und Gülle ist es jedoch im allgemeinen erforderlich, diese vor der Zugabe des Pilzpräparats zu trocknen, und zwar normalerweise soweit, daß keine Flüssigkeit mehr abtropft.

Der Jauche muß deshalb eine relativ große Menge Wasser entzogen werden, so daß das erfindungsgemäße Verfahren hinsichtlich fäkaler Abfälle neben Mist vor allem für Gülle geeignet ist, bei der, falls überhaupt erforderlich, die abzutrennende Flüssigkeitsmenge gering ist. Bei Mist braucht freilich überhaupt keine Trocknung durchgeführt zu werden.

Die Trocknung der Gülle kann, falls sie notwendig sein sollte, z. B. durch Abtropfen, Sieben, Filtrieren oder dgl. erfolgen. Dadurch entsteht allerdings Jauche, die, falls sie ebenfalls aufbereitet werden muß, zu Problemen führen kann. Es wird deshalb vorgezogen, die Gülle durch Eindampfen und/oder durch Zugabe saugfähiger Materialien zu trocknen. Das Eindampfen der Gülle kann mittels Verdampfer, durch Trocknen an der Luft oder dgl. erfolgen. Die Erwärmung der Gülle beim Eindampfen sollte dabei 80° C, vorzugsweise 70° C nicht überschreiten, weil sonst der Nährstoffgehalt des nach Zusatz des Pilzpräparates erfindungsgemäß gebildeten Düngemittels herabgesetzt werden kann.

Als saugfähige Materialien werden vorzugsweise organische Materialien verwendet, beispielsweise Torf oder verrottbare Abfälle, wie Altpapier, Sägemehl und dgl. Wenn Gülle verwendet wird, reicht es in der Regel aus, ihr 5 bis 20 Gew.-% eines solchen organischen Materials zuzusetzen, um sie soweit zu trocknen, damit sie nach Zusatz des Pilzpräparates verrottet werden kann.

Die Gülle kann aus menschlichen oder tierischen fäkalen Abfällen gebildet sein. Insbesondere können die bei der modernen Massenviehhaltung in großen Mengen anfallenden Rinder- und Schweinegüllemengen nach dem erfindungsgemäßen Verfahren in einfacher Weise zu einem hochwertigen Düngemittel aufgearbeitet werden.

Die fäkalen Abfälle, die, wie erwähnt, soweit trocken sein sollen, daß von ihnen kein Wasser mehr abtropft, werden dann mit dem Pilzpräparat versetzt.

Das Pilzpräparat besteht hauptsächlich aus Pilzen der Gruppen: Penicillium (grün), Aspergillus (grau-schwarz), Rhizopus (gelblich) und Mucor (weiß).

Das Pilzpräparat wird vorzugsweise durch Fermentierung von Getreide hergestellt. Jedoch sind auch andere stärkehaltige pflanzliche Substrate verwendbar. Als Getreide haben sich insbesondere Weizen, Roggen, Hafer, Gerste und Hirse als geeignet erwiesen. Aber auch andere Getreidesorten sind einsetzbar, beispielsweise Mais. Desgleichen ist der Einsatz von z. B. Sojamehl möglich.

Auf den genannten pflanzlichen Substraten bzw. Getreidesorten wachsen die Pilze nach Art und Menge unterschiedlich. Eine Optimierung des Pilzpräparats läßt sich daher in der Weise erzielen, daß man einzelne Getreidesorten getrennt voneinander fermentiert und dann die aus den einzelnen fermentierten Getreidesorten gebildeten Pilze miteinander vermischt. Der Anteil der durch Fermentierung des Weizens gebildeten Pilze des Pilzpräparats beträgt jedoch vorzugsweise mehr als 50 Gew.-%.

Beispielsweise hat sich ein Pilzpräparat zum Verrotten von Rindergülle als besonders geeignet erwiesen, das aus 60 bis 80 Gew.-% fermentiertem Weizen und jeweils 3 bis 10 Gew.-% fermentiertem Roggen, Hafer, Gerste und Hirse besteht.

Zur Fermentierung wird die in einer Mühle grob vermahlene Getreidesorte mit Wasser angefeuchtet, und zwar in einem Gewichtsverhältnis von 100 bis 500 ml Wasser pro Kilogramm Getreide. Das so angefeuchtete Getreide bildet das Substrat bzw. den Nährboden für das Wachstum der Pilze.

Das angefeuchtete Getreide wird dann zur Verpilzung z. B. in ein flaches belüftetes Gefäß gegeben. Die Verpilzung, die bei einer Außentemperatur von vorzugsweise 20 bis 25° erfolgt, ist nach etwa 2 Tagen bis 2 Wochen abgeschlossen, wobei sich die Temperatur vorübergehend auf mehr als 30° C erhöhen kann. Um die Verpilzung zu beschleunigen, ist es vorteilhaft, den Nährboden mit entsprechend hergestellten Pilzen zu impfen.

Die Verpilzung erfolgt aerob, also unter Belüftung des Gefäßes, jedoch sollte darauf geachtet werden, daß kein Luftzug auf den Nährboden einwirkt.

Der nach dem Verschimmeln des Getreides gebildete Kuchen wird aus dem Gefäß entfernt, zerkleinert und an der Luft getrocknet. Auf diese Weise wird ein nahezu staubtrockenes pulverförmiges Pilzpräparat erhalten, dessen Wassergehalt im allgemeinen weniger als 20, vorzugsweise weniger als 10 Gew.-% beträgt.

Die Wirksamkeit des Pilzpräparats läßt sich durch einen Zusatz von Algen erhöhen. Die Algen werden dabei vorzugsweise als trockenes Granulat mit einem Wassergehalt von im allgemeinen weniger als 20, vorzugsweie weniger als 10 Gew.-% zugesetzt, und zwar in einem Verhältnis von 1 : 100, insbesondere 1 : 20 Gewichtsteile je 100 Gewichtsteile trockenes Pilzpräparat. Als Algen werden insbesondere Braun-und/oder Grün-Meeresalgen verwendet.

Das ggfs. mit Algen versetzte trockene Pilzpräparat kann in einem trockenen Raum, beispielsweise in luftdurchlässigen Säcken, praktisch zeitlich unbegrenzt gelagert werden.

Das trockene, lagerfähige, ggfs. mit Algen versetzte Pilzpräparat kann der Gülle, die wie erwähnt, vorher ggfs. getrocknet worden ist, unmittelbar zugesetzt werden, um sie zu verrotten.

Als vorteilhaft hat es sich jedoch erwiesen, das Pilzpräparat vor der Zugabe zu den fäkalen Abfällen zu reaktivieren. Die Reaktivierung erfolgt dabei vorzugsweise mit Molke. Dazu wird im allgemeinen 1 Gewichtsteil des ggfs. mit Algen versetzten Pilzpräparats mit 0,1 bis 3, vorzugsweise 0,1 bis 5 Teilen Molkepulver vermischt, welches im allgemeinen einen Wassergehalt von weniger als 20, vorzugsweise weniger als 10 Gew.-% aufweist.. Diesem Gemisch wird dann Wasser unter Rühren zugesetzt, bis es eine breiförmige Konsistenz aufweist, worauf es 2 h bis 3 Tage, vorzugsweise 1 bis 2 Tage, einer Temperatur von 20 bis 50°C, vorzugsweise 30 bis 45°C, ausgesetzt wird, um die Pilze zu reaktivieren.

Das reaktivierte, ggfs. mit Algen versetzte Pilzpräparat wird dann der, wie erwähnt, vorher ggfs. getrockneten Gülle in einer Menge von 0,005 bis 0,2, vorzugsweise 0,02 bis 0,1 Gewichtsteile pro Gewichtsteil der Gülle zugesetzt, (und zwar bezogen auf das Gewicht des eingesetzten trockenen Pilzpräparats vor dessen Reaktivierung und dem Algenzusatz).

Das Pilzpräparat und die Gülle werden dabei innig vermischt, worauf das Gemisch in ein Gefäß gegeben wird, um die Gülle unter Einwirkung der Pilze verrotten zu lassen. Das Gefäß muß zu diesem Zweck luftdurchlässig sein, vorzugsweise sind daher seine Wände sowie ggfs. der Boden mit Lochungen versehen.

Die Außentemperatur soll während der Verrottung nicht unter 20°C liegen. Während der Verrottung steigt dann die Temperatur in dem Gefäß im allgemeinen auf über 40°C an. Wenn die Temperatur wieder auf oder annähernd auf die Außentemperatur gesunken ist, ist der Verrottungsvorgang beendet. Im allgemeinen dauert die Verrottung mehr als einen Tag, höchstens jedoch 2 Wochen und in der Regel etwa eine Woche.

Das Verrottungsprodukt wird dann ggfs. mit einer Mühle granuliert und zu einem lagerfähigen, nahezu staubtrockenen Düngemittel getrocknet, dessen Wassergehalt im allgemeinen unter 10 Gew.-% liegt.

Das so gebildete Düngemittel kann in einem trockenen Raum zeitlich praktisch unbegrenzt gelagert und beispielsweise in luftdurchlässigen Säkken in den Handel gebracht werden.

Bei dem nach dem erfindungsgemäßen Verfahren hergestellten Düngemittel ist der unangenehme Geruch der Gülle völlig verschwunden. Im Gegenteil, es weist sogar eher einen angenehmen Geruch auf, der mit dem Geruch eines Waldbodens vergleichbar ist.

Da die Haltbarkeit des erfindungsgemäß hergestellten Düngemittels praktisch unbegrenzt ist, kann mit ihm beispielsweise eine zeitlich zielbewußte Düngung durchgeführt werden. Auch ist das erfindungsgemäß hergestellte Düngemittel staubtrokken, also sehr leicht und damit problemlos transportierbar.

Da das Ammoniak bzw. der Ammoniumstickstoff in dem Düngemittel, wenn nicht ganz, so doch zumindest auf einen sehr geringen Wert herabgesetzt worden ist, ist eine Nitratverunreinigung des Grundwassers mit dem erfindungsgemäß hergestellten Düngemittel praktisch ausgeschlossen.

Wie Versuche gezeigt haben, bei denen ein Stück Rasen einerseits mit dem erfindungsgemäß hergestellten Düngemittel gedüngt und ein benachbartes Rasenstück mit einer vergleichbaren Menge Gülle gedüngt worden ist, führt das erfindungsgemäß hergestellte Düngemittel zu einem grünen dichten, nahezu völlig unkrautfreien Rasen, während das mit der Gülle gedüngte Rasenstück deutlich weniger dicht und grün und darüberhinaus stark mit Unkraut durchsetzt war.

Auch ist die Rottezeit von in der Regel etwa einer Woche zur Bildung der Verrottungsprodukte bzw. des Düngemittels aus der Gülle relativ kurz, so daß mit einem relativ kleinen Verrottungsbehälter relativ große Güllemengen preisgünstig in wertvolles Düngemittel übergeführt werden können.

Vorstehend ist das erfindungsgemäße Verfahren vor allem anhand der Aufbereitung von Gülle beschrieben worden, da die Aufbereitung von Gülle in der Praxis besonders wichtig ist. In gleicher Weise kann jedoch Klärschlamm aufgearbeitet werden, wobei, wie im übrigen auch bei Mist, bei Klärschlamm eine Trocknung vor der Zugabe des Pilzpräparats normalerweise nicht erforderlich ist.

## Ansprüche

1. Verfahren zur Aufbereitung von fäkalen Abfällen und Klärschlamm durch Zugabe von Mikroorganismen, dadurch gekennzeichnet, daß als Mikroorganismen ein Pilzpräparat verwendet und das nach Einwirkung der Pilze auf die fäkalen Abfälle bzw. den Klärschlamm erhaltene Verrottungsprodukt zu einem Düngemittel granuliert wird.

2. Verfahren nach Anspruch 1, dadurch gekennzeichnet, daß die fäkalen Abfälle bzw. der Klärschlamm vor der Zugabe des Pilzpräparats zumindest soweit getrocknet werden, daß sie nicht mehr Abtropfen.

3. Verfahren nach Anspruch 2, dadurch gekennzeichnet, daß die Trocknung der fäkalen Abfälle bzw. des Klärschlamms durch Eindampfen erfolgt.

4. Verfahren nach Anspruch 3, dadurch gekennzeichnet, daß die Temperatur beim Eindampfen der fäkalen Abfälle bzw. des Klärschlamms höchstens 80°C beträgt.

5. Verfahren nach einem der Ansprüche 2 bis 4, dadurch gekennzeichnet, daß zur Trocknung der fäkalen Abfälle bzw. des Klärschlamms ein saugfähiges Material zugegeben wird.

6. Vergahren nach Anspruch 5, dadurch gekennzeichnet, daß als saugfähiges Material organische Materialien verwendet werden.

7. Verfahren nach Anspruch 6, dadurch gekennzeichnet, daß als saugfähiges organisches Material Torf, Altpapier oder Sägemehl verwendet wird.

8. Verfahren nach einem der Ansprüche 5 bis 7, dadurch gekennzeichnet, daß die fäkalen Abfälle durch Gülle gebildet werden und die Gülle zur Trocknung mit 5 bis 20 Gew.-% saugfähigem Material versetzt wird.

9. Verfahren nach einem der vorstehenden Ansprüche, dadurch gekennzeichnet, daß das Pilzpräparat durch Fermentierung eines stärkehaltigen Pflanzensubstrats erhalten wird.

10. Verfahren nach einem der vorstehenden Ansprüche, dadurch gekennzeichnet, daß das Pilzpräparat durch Pilze aus der Gruppe: Penicillium, Aspergillus, Rhizopus und/oder Mucor gebildet wird.

11. Verfahren nach Anspruch 9 oder 10, dadurch gekennzeichnet, daß das Pilzpräparat nach der Fermentierung des stärkehaltigen Pflanzensubstrats in ein getrocknetes Granulat übergeführt wird.

12. Verfahren nach einem der vorstehenden Ansprüche, dadurch gekennzeichnet, daß das stärkehaltige Pflanzensubstrat aus Getreide hergestellt wird.

13. Verfahren nach Anspruch 12, dadurch gekennzeichnet, daß als Getreide Weizen, Roggen, Hafer, Gerste und/oder Hirse verwendet wird.

14. Verfahren nach Anspruch 13, dadurch gekennzeichnet, daß das Getreide aus mindestens 50 Gew.-% Weizen besteht.

15. Verfahren nach Anspruch 13 oder 14, dadurch gekennzeichnet, daß mehrere Getreidesorten getrennt fermentiert und nach der Fermentierung zur Bildung des Pilzpräparats vermischt werden.

16. Verfahren nach einem der vorstehenden Ansprüche, dadurch gekennzeichnet, daß dem Pilzpräparat Algen zugesetzt werden.

17. Verfahren nach Anspruch 16, dadurch gekennzeichnet, daß die Algen als trockenes Granulat dem getrockneten granulierten Pilzpräparat zugesetzt werden, wobei das Gewichtsverhältnis des Pilzpräparats zu den Algen 100 : 1 bis 100 beträgt.

18. Verfahren nach Anspruch 16 oder 17, dadurch gekennzeichnet, daß als Algen Braun- und/oder Grün-Meeresalgen verwendet werden.

19. Verfahren nach einem der vorstehenden Ansprüche, dadurch gekennzeichnet, daß das trockene granulierte Pilzpräparat den fäkalen Abfällen bzw. dem Klärschlamm in einer Menge von 0,5 bis 10 Gew.-% zugesetzt wird.

20. Verfahren nach einem der vorstehenden Ansprüche, dadurch gekennzeichnet, daß das trockene granulierte Pilzpräparat vor seiner Zugabe zu den fäkalen Abfällen bzw. dem Klärschlamm mit Molke versetzt wird.

21. Verfahren nach Anspruch 20, dadurch gekennzeichnet, daß einem Gewichtsteil des trockenen granulierten Pilzpräparats 0,1 bis 2 Gewichtsteile Molke-Pulver zugesetzt werden und das Gemisch mit Wasser in einen Brei übergeführt wird.

22. Verfahren nach Anspruch 20 oder 21, dadurch gekennzeichnet, daß man den Pilzpräparat/Molke-Brei bei 20 bis 50 °C 2 h bis 3 Tage aufbewahrt, bevor er den fäkalen Abfällen bzw. dem Klärschlamm zugegeben wird.

23. Verfahren nach einem der vorstehenden Ansprüche, dadurch gekennzeichnet, daß man das Pilzpräparat auf die fäkalen Abfälle bzw. den Klärschlamm bei 20 bis 50 °C 1 Tag bis 3 Wochen einwirken läßt.

24. Mittel zur Aufbereitung von fäkalen Abfällen oder Klärschlamm, dadurch gekennzeichnet, daß es aus einem Pilzpräparat besteht.

25. Mittel nach Anspruch 24, dadurch gekennzeichnet, daß das Pilzpräparat aus Pilzen der Gruppe: Penicillium, Aspergillus, Rhizopus und/oder Mucor gebildet ist.

26. Mittel nach Anspruch 24 oder 25, dadurch gekennzeichnet, daß es durch Fermentierung eines stärkehaltigen Pflanzensubstrats erhalten wird.

27. Mittel nach Anspruch 24 bis 26, dadurch gekennzeichnet, daß es aus einem Gemisch aus dem Pilzpräparat und Algen besteht, wobei, jeweils bezogen auf den trockenen granulierten Zustand des Pilzpräparats bzw. der Algen, das Gewichtsverhältnis des Pilzpräparats zu den Algen 100 : 1 bis 100 beträgt.

28. Mittel nach Anspruch 27, dadurch gekennzeichnet, daß die Algen aus Braun- und/oder Grün-Meeresalgen bestehen.

Europäisches
Patentamt

**EUROPÄISCHER RECHERCHENBERICHT**

Nummer der Anmeldung

EP    89 11 8831
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-2206851 (C. POTTS ET.AL.)<br>* das ganze Dokument * | 1, 2, 5,<br>6 | C05F3/00<br>C05F7/00 |
| Y | | 7, 9-13,<br>23-26 | |
| Y | CHEMICAL ABSTRACTS, vol. 83, no. 3, 21 Juli 1975<br>Columbus, Ohio, USA<br>& JP-A-7518252 (Mitsubishi Metal Corp.)<br>(26-02-1975)<br>Seite 409; ref. no. 26880A<br>* Zusammenfassung * | 7, 10,<br>23-26 | |
| X | FR-A-713264 (H.G. GILLILAND)<br>* Seite 2, Zeilen 19 - 97 * | 1, 24 | |
| X | US-A-4267049 (L.G. ERICKSON ET.AL.)<br>* Spalte 5, Zeilen 4 - 10; Figur 1 *<br>* Spalte 8, Zeile 36 - Spalte 9, Zeile 12 *<br>* Spalte 11, Zeilen 34 - 45 * | 1, 10,<br>24, 25 | |
| A | AU-A-480639 (SAMAMATIC TANKS PROPRIETARY LIMITED)<br>* Seite 4, Zeile 10 - Seite 8, Zeile 4 *<br>* Seite 18, Zeilen 7 - 9; Ansprüche * | 1, 10,<br>16, 24,<br>25, 27 | **RECHERCHIERTE SACHGEBIETE (Int. Cl.5)**<br><br>C05F<br>C12N |
| X | US-A-4321142 (J. STARR)<br>* Ansprüche * | 24 | |
| A | | 27 | |
| Y | FR-A-913096 (A. JACKSON MOYER)<br>* Seite 2, Zeile 69 - Seite 3, Zeile 37 * | 9,<br>11-13,<br>26 | |
| Y | US-A-3034968 (W.R. JOHNSTON)<br>* Ansprüche * | 9,<br>11-13,<br>26 | |
| Y | DE-C-706743 (H. FINK ET.AL.)<br>* Seite 1; Ansprüche * | 9,<br>11-13,<br>26 | |

Der vorliegende Recherchenbericht wurde für alle Patentansprüche erstellt

| Recherchenort | Abschlußdatum der Recherche | Prüfer |
|---|---|---|
| DEN HAAG | 02 JULI 1990 | SCHUT R.J. |

Europäisches
Patentamt

EUROPÄISCHER RECHERCHENBERICHT

Nummer der Anmeldung

EP    89 11 8831
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-C-744543 (R. SCHENK ET. AL.) <br> * das ganze Dokument * | 20-22 | |

RECHERCHIERTE SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| DEN HAAG | 02 JULI 1990 | SCHUT R.J. |